# EUROPÄISCHE PATENTSCHRIFT

(11) **EP 2 075 076 B1**
(45) Veröffentlichungstag und Bekanntmachung des Hinweises auf die Patenterteilung: **26.06.2013**
(21) Anmeldenummer: 08010605.7
(22) Anmeldetag: 11.06.2008
(51) Int. Cl.: B08B 9/055, F16L 55/26, F16L 55/40, F28G 1/12

(54) **Reinigungsmolch aus Schwammgummi zur Rohrreinigung**
Cleaning pig made of foam rubber for cleaning pipes
Racleur de nettoyage en caoutchouc éponge pour le nettoyage de tuyaux

(30) Priorität: 28.12.2007 DE 102007063106
(43) Veröffentlichungstag der Anmeldung: 01.07.2009
(73) Patentinhaber: BOSIG GmbH, 73333 Gingen a. d. Fils (DE)
(72) Erfinder: Schmid, Oliver, 73333 Gingen a. d. Fils (DE)
(74) Vertreter: Konle, Christian

(56) Entgegenhaltungen:
- EP-A- 0 286 320
- DE-A1- 2 136 701
- DE-A1- 3 015 516
- DE-A1-102006 035 258
- GB-A- 2 339 876
- GB-A- 2 342 971
- US-A- 3 474 479

## Beschreibung

Die Erfindung bezieht sich auf das Herstellungsverfahren für einen Reinigungsmolch aus Schwammgummi zur Rohrreinigung.

Bei Schwammgummi handelt es sich um offenporigen Zellkautschuk, der durch Zumischen von Treibmittel zu einer Gummimasse aus natürlichem oder synthetischem Kautschuk mit anschließendem Vulkanisieren gebildet wird. Formteile aus Schwammgummi haben vielfältige Eigenschaften, welche ihren industriellen Einsatz wertvoll machen. Schwammgummi ist elastisch, flexibel, fest, abriebfest, wasseraufnahmefähig, in beliebigen Formen und Farben herstellbar, zuverlässig und hochwertig. In Form von Kugeln oder einfachen Zylindern werden Schwammgummi-Formteile zur Rohrreinigung in Betonpumpen, Schankanlagen, Melkanlagen oder Kraftwerken verwendet.

Reinigungskugeln aus Schwammgummi sind zwar billiger aber weniger reinigungsintensiv als Reinigungszylinder (auch "Reinigungsmolche" genannt"), da sich Kugeln während des Reinigungsvorganges ständig um alle Raumachsen drehen. Weil die Kontaktfläche zwischen einer Reinigungskugel und der Innenumfangsfläche des Rohrs bzw. Schlauches sehr klein ist, werden durch die ständige Rotation der Kugel die angestauten Rückstände teilweise wieder auf die Rückseite der Kugel transportiert. Reinigungskugeln müssen daher in der Regel mehrere Male durch das Rohr bzw. den Schlauch "geschossen" werden, um eine rückstandsfreie Reinigung zu erzielen.

Reinigungsmolche aus einfachen Schwammgummizylindern weisen den Nachteil auf, dass sie nur eine geringe Biegsamkeit in Längsrichtung besitzen, so dass sie dazu neigen, an Biegungen oder Kurven des zu reinigenden Rohres bzw. Schlauches stecken zu bleiben. Dadurch wird vor den Biegungen ein erheblicher Kraftanstieg des eingeleiteten Druck- oder Saugmediums zum Vortrieb des Reinigungsmolches verursacht, was zu ruckartigen Vorwärtsbewegungen des Reinigungsmolches mit entsprechend verringerter Reinigungswirkung führt.

Die Aufgabe der Erfindung besteht demgegenüber darin, einen Reinigungsmolch aus Schwammgummi zu schaffen, welcher eine größere Biegsamkeit in Längsrichtung und damit einen gleichmäßigeren Vortrieb mit höherer Reinigungswirkung ermöglicht.

Die GB 2342971-A zeigt einen Reinigungsmolch aus Schwammgummi und ein Herstellungsverfahren gemäß dem Oberbegriff des Anspruchs 1.

Vorteilhafte Weiterbildungen des Reinigungsmolchs nach Anspruch 1 ergeben sich aus den Unteransprüchen.

Die Erfindung beruht auf der Überlegung, durch wenigstens eine Hohlkehle an der Umfangsfläche des zylindrischen Reinigungsmolches eine größere Biegsamkeit in Längsrichtung zu erzielen. Die mit den Hohlkehlen erzielte Vergrößerung der Biegsamkeit in Längsrichtung verringert die Gefahr, dass der Reinigungsmolch an Biegungen oder Kurven des zu reinigenden Rohres bzw. Schlauches stecken bleibt. Der Vortrieb des erfindungsgemäßen Reinigungsmolches erfolgt daher gleichmäßiger mit entsprechend besserer Reinigungswirkung. Dabei bildet jede Hohlkehle einen zusätzlichen Aufnahmeraum für Rückstandsreste, die sich unter die Kontaktflächen der zylindrischen Umfangsabschnitte des Reinigungsmolches geschoben haben. Die Hohlkehle(n) können beispielsweise ringförmig oder schraubenförmig ausgebildet sein und mit scharfkantigen Rändern zu den zylindrischen Umfangsabschnitten hin versehen werden, so dass ein zusätzlicher Schabeffekt für derartige Rückstandsreste erzielt werden kann. Es ist ferner möglich, den Reinigungsmolch mit einer sphärisch, insbesondere kugelig gekrümmten, vorderen Stirnfläche auszubilden, um den Durchgang des Reinigungsmolches durch Biegungen und Kurven zu erleichtern. Die Erfindung gemäß dem kennzeichnenden Teil des 1. Anspruchs schlägt vor, die Stirnfläche in vorteilhafter Weise mit einer Gummihaut gegen abrasive Kräfte zu schützen.

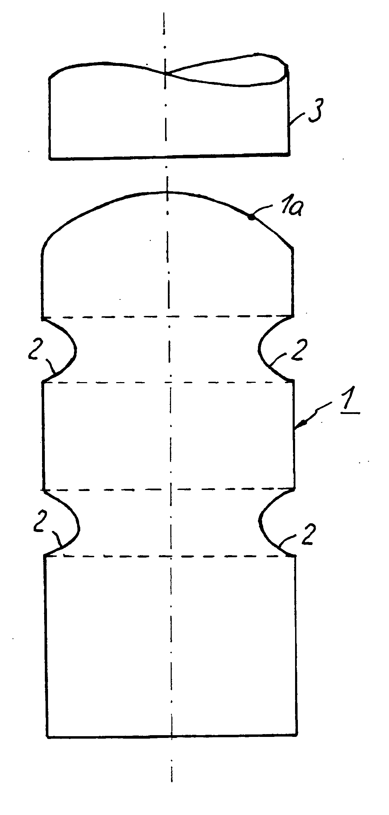

Die Erfindung wird nachstehend an Hand eines in den Zeichnungen dargestellten Ausführungsbeispiels näher erläutert. Die einzige Figur zeigt einen schematischen Querschnitt durch einen Reinigungsmolch nach der Erfindung.

Der in der Figur gezeigte Reinigungsmolch 1 besteht aus einem Schwammgummizylinder, der an seinem Umfang eine oder (wie dargestellt) zwei bzw. mehrere Hohlkehlen 2 aufweist. Die Hohlkehlen 2 sind im dargestellten Beispielsfalle ringförmig ausgebildet, doch sind auch andere Ausbildungen, beispielsweise in Spiral- oder Schraubenform möglich. Der Querschnitt der Hohlkehlen 2 kann halbkreisförmig, sinusförmig oder becherförmig ausgebildet sein.

Der Reinigungsmolch 1 wird in ein Rohr oder einen Schlauch 3, beispielsweise in den Hochdruckschlauch einer Betonpumpe, wandbündig eingeführt. Der Durchmesser des Reinigungsmolches 1 ist etwas größer als der Rohr- bzw. Schlauchdurchmesser gewählt, so dass der Reinigungsmolch 1 beim Einführen in das Rohr bzw. den Schlauch 3 radial komprimiert werden muss. Da der Reinigungsmolch 1 aus elastischem Schwammgummi besteht, lässt er sich leicht in radialer Richtung zusammendrücken, um sich dann innerhalb des Rohres oder Schlauches 3 wieder auszudehnen und sich mit seinen zylindrischen Umfangsabschnitten unter radialem Druck nach außen gegen die Innenfläche des Rohrs bzw. Schlauches 3 formschlüssig anzulegen.

Nach erfolgtem Einführen des Reinigungsmolches 1 wird das Rohr bzw. der Schlauch 3 an eine nicht gezeigte Druck- oder Saugleitung angeschlossen. Da der Reinigungsmolch 1 wie ein Pfropfen das Rohr bzw. den Schlauch 3 zur Druck- bzw. Saugleitung hin abschließt, wird am Reinigungsmolch 1 eine hohe Schub- bzw. Zugkraft aufgebaut, die den Reinigungsmolch 1 durch das Rohr bzw. den Schlauch 3 in Längsrichtung vorwärts treibt, bis er an dessen freiem Ende ausgeworfen wird. Die im Rohr bzw. Schlauch 3 vorhandenen Rückstände, beispielsweise flüssiger Beton, werden von der vorderen Stirnseite 1a des Reinigungsmolchs 1 vor sich her gegen das Rohr- bzw. Schlauchende ins Freie geschoben. Im Falle einer Saugleitung werden größere Rückstandsklumpen mit abgesaugt, so dass sie nicht allein durch den Reinigungsmolch 1 transportiert werden müssen.

Die vordere Stirnseite la des Reinigungsmolchs 1 kann in bevorzugter Weise sphärisch, insbesondere kugelig gekrümmt ausgebildet sein, um den Durchgang des Reinigungsmolches 1 durch Biegungen und Kurven des Rohrs bzw. Schlauchs 3 zu erleichtern. Des Weiteren kann die ebene oder gekrümmte Stirnseite la mit einer dünnen Haut aus Gummi oder Polyurethan versehen sein, um die Stirnseite 1a gegen abrasive Kräfte zu schützen.

Die Hohlkehlen 2 des Reinigungsmolches 1 besitzen beim Vortrieb durch das Rohr bzw. den Schlauch 3 zwei wesentliche Effekte: Zum einen sorgen die Querschnittsverjüngungen der Hohlkehlen 2 für eine bessere Biegsamkeit des Reinigungsmolches 1 in Längsrichtung im Vergleich zu einer ausschließlich zylindrischen Ausbildung ohne Hohlkehlen 2. Zum anderen nehmen die Hohlkehlen 2 solche Rückstände innerhalb des Rohrs bzw. Schlauches 3 auf, die sich unter die Kontaktflächen zwischen den zylindrischen Umfangsabschnitten des Reinigungsmolches 1 und der Innenwand des Rohrs bzw. Schlauches 3 schieben. Um derartige Rückstände abzustreifen, sind in bevorzugter Weise die Ränder der Hohlkehlen 2 zu den umgebenden zylindrischen Umfangsabschnitten hin scharfkantig ausgebildet, so dass sie beim Vortrieb des Reinigungsmolches 1 einen zusätzlichen Schabeffekt längs der Innenwand des Rohres bzw. Schlauches 3 ausüben.

Der Reinigungsmolch 1 wird aus einem vorgefertigten Schwammgummiblock ausgeschnitten bzw. ausgefräst, was schnell und kostengünstig ist. Auf der Stirnseite 1a wird nachträglich eine Außenhaut aus Gummi oder PUR-Folie aufgebracht, beispielsweise aufvulkanisiert oder aufgeklebt.

Die Hohlkehlen 2 werden. nach der Herstellung eines zylinderförmigen Reinigungsmolches 1 in dessen Umfangsfläche gefräst.

## Patentansprüche

1. Verfahren zum Herstellen eines Reinigungsmolches aus Schwammgummi geeignet zur Reinigung von Rohren oder Schläuchen, insbesondere von Betonpumpen, mit einer zylindrischen Form, in deren Umfangsfläche wenigstens eine Hohlkehle (2) ausgebildet ist, **gekennzeichnet durch** folgende Verfahrensschritte:
(a) Aus einem vorgefertigten Schwammgummiblock wird die zylindrische Form ausgeschnitten oder ausgefräst;
(b) anschließend wird in die Umfangsfläche der zylindrischen Form wenigstens eine Hohlkehle (2) gefräst, und
(c) auf der Stirnseite (1a) der zylindrischen Form wird nachträglich eine Haut aus Gummi oder PUR-Folie aufgebracht, welche einen Schutz gegen abrasive Kräfte bildet.

2. Verfahren nach Anspruch 1, **dadurch gekennzeichnet, dass** die Hohlkehle (2) ringförmig oder schraubenförmig ausgebildet wird.

3. Verfahren nach Anspruch 1 oder 2, **dadurch gekennzeichnet, dass** die Hohlkehle (2) mit einem halbkreisförmigen, sinusförmigen oder becherförmigen Querschnitt ausgebildet wird.

4. Verfahren nach einem der Ansprüche 1 bis 3, **dadurch gekennzeichnet, dass** die vordere Stirnseite (1a) sphärisch gekrümmt ausgebildet wird.

5. Verfahren nach Anspruch 4, **dadurch gekennzeichnet, dass** die vordere Stirnseite (1a) halbkugelig ausgebildet wird.

6. Verfahren nach einem der Ansprüche 1 bis 5, **dadurch gekennzeichnet, dass** die Haut aus Gummi oder PUR-Folie aufvulkanisiert wird.

7. Verfahren nach einem der Ansprüche 1 bis 6, **dadurch gekennzeichnet, dass** die Haut aus Gummi oder PUR-Folie aufgeklebt wird

## Claims

1. Method for producing a cleaning pig made of foam rubber being suitable for cleaning pipes or hoses, in particular those of cement pumps, which has a cylindrical shape and whose circumferential surface has at least one formed hollow concave recess (2), **characterized by** the following processing steps:
(a) the cylindrical shape is cut or milled out of a prefabricated foam rubber block;
(b) afterwards, at least one concave recess (2) is milled into the circumferential surface of the cylindrical shape, and
(c) on the face side (1a) of the cylindrical shape there is subsequently applied a skin of rubber or PUR foil to provide protection against abrasive forces.

2. Method according to Claim 1, **characterized in that** the concave hollow recess (2) is formed as a ring or screwthread.

3. Method according to Claim 1 or 2, **characterized in that** the concave hollow recess (2) is formed with a semicircular, sine wave or cup shaped cross section.

4. Method according to one of Claims 1 to 3, **characterized in that** the front face side (Ia) is spherically curved shaped.

5. Method according to Claim 4, **characterized in that** the forward face side (Ia) is hemispherically shaped.

6. Method according to one of Claims 1 to 5, **characterized in that** the skin of rubber or PUR foil is applied by vulcanising.

7. Method according to one of Claims 1 to 6, **characterized in that** the skin of rubber or PUR foil is applied by adhesion.

## Revendications

1. Procédé de fabrication d'un racleur de nettoyage en caoutchouc éponge pour le nettoyage de tubes ou de tuyaux, en particulier de pompes à béton, ce recleur comprent d'une forme cylindrique, dans la surface de circonférence duquel au moins une gorge (2) est formée, **caractérisé par** les opérations suivantes:
(a) La forme cylindrique est découpée ou fraisée à partir d'un bloc en caoutchouc éponge préfabriqué,
(b) ensuite, au moins une gorge est fraisée (2) dans la surface de circonférence de la forme cylindrique, et
(c) une peau en caoutchouc ou en PUR, qui forme une protection contre les forces abrasives, est appliquée après coup sur la face frontale (Ia) de la forme cylindrique.

2. Procédé selon la revendication 1, **caractérisé en ce que** la gorge (2) est en forme d'anneau ou de vis.

3. Procédé selon la revendication 1 ou 2, **caractérisé e n ce** q u e la gorge (2) est formée d'une section transversale semi-circulaire, sinusoïdale ou en gobelet.

4. Procédé selon l'une des revendications de 1 à 3, **caractérisé en ce que** la face frontale avant (Ia) est formée comme une sphère incurvée.

5. Procédé selon la revendication 4, **caractérisé en ce que** la face frontale avant (Ia) est formée comme un hémisphère.

6. Procédé selon l'une des revendications de 1 à 5 **caractérisé en ce que** la peau en caoutchouc ou en PUR est vulcanisée.

7. Procédé selon l'une des revendications 1 à 6 **caractérisé en ce que** la peau en caoutchouc ou en PUR est collée.
